# EUROPEAN PATENT APPLICATION

(11) **EP 4 039 592 A2**
(43) Date of publication of application: **10.08.2022**
(21) Application number: 21218139.0
(22) Date of filing: 29.12.2021
(51) Int. Cl.: B64C 39/02, G01S 3/04, G08G 5/00

(54) **UNMANNED AERIAL VEHICLE**

(30) Priority: 09.02.2021 US 202117171383
(71) Applicant: Rohde & Schwarz GmbH & Co. KG, 81671 München (DE)
(72) Inventor: Guezelarslan, Baris, 81671 München (DE); Hettich, Dominik, 81671 München (DE); Mayr, Bernhard, 81671 München (DE)
(74) Representative: Prinz & Partner mbB

(57) **Abstract**

An unmanned aerial vehicle (10) for at least one of direction finding and spectrum monitoring comprises a main body (12) including at least one electronic circuit (14) and at least one motor (16). The unmanned aerial vehicle (10) also has at least one rotor (18) associated with the motor (16). The unmanned aerial vehicle (10) comprises an outer housing (24) surrounding the rotor (18) partially, the outer housing (24) comprising at least one antenna module (26) configured to receive a radio signal.

## Description

The invention relates to an unmanned aerial vehicle (UAV) for direction finding and/or spectrum monitoring.

In the state of the art, stationary direction finding systems are known that are used to observe a certain area. In general, this is also known spectrum monitoring since the electromagnetic spectrum, particularly the radio spectrum, assigned to the area to be observed is monitored in order to identify sources of radio signals, particularly interferers.

Spectrum monitoring efficiently helps to enforce compliance with (international) radio traffic regulations, as breaches can be recognized in time by means of radio surveillance or rather radio monitoring. Generally, radio traffic is regulated in order to ensure that when police, radio stations, air traffic control and amateur radios are all on the air at the same time, they do not cause unusual interference. Compliance with the respective regulations is enforced by radio monitoring.

So far, stationary direction finding systems are used in order to locate ("direction finding") the respective source of a certain radio signal, for instance a disturbing or interfering signal. However, certain sources cannot be identified effectively as this would require to get closer to the source, which might not be possible for different reasons.

Further, it might also be necessary to adapt the relative orientation with respect to the source in order to improve the receiving quality of the direction finder. This is also not always applicable since the direction finder may relate to stationary systems that cannot be moved in order to adapt the relative orientation.

Accordingly, there is need for an improved direction finding.

The invention provides an unmanned aerial vehicle for direction finding and/or spectrum monitoring. The unmanned aerial vehicle comprises a main body including at least one electronic circuit and at least one motor. The unmanned aerial vehicle also comprises an outer housing surrounding the rotor partially, the outer housing comprising at least one antenna module configured to receive a radio signal.

The invention also provides an unmanned aerial vehicle for direction finding and/or spectrum monitoring. The unmanned aerial vehicle comprises a main body including at least one electronic circuit and at least one motor. The unmanned aerial vehicle also comprises a shielding body located around the main body at least partially. The unmanned aerial vehicle has at least one rotor associated with the motor. Further, the unmanned aerial vehicle comprises at least one antenna module configured to receive a radio signal.

Moreover, the invention provides an unmanned aerial vehicle for at least one of direction finding and spectrum monitoring. The unmanned aerial vehicle comprises a main body with a center, at least one rotor associated with the main body, and at least one antenna module configured to receive a radio signal. The rotor has a rotational axis that coincidences with a center axis of the unmanned aerial vehicle, which runs through the center of the main body.

Accordingly, the rotor is centered with regard to the overall dimensions of the unmanned aerial vehicle that provides the direction finding functionality. The respective electronic components are also located at a center portion of the unmanned aerial vehicle, thereby ensuring that their influence on the at least one antenna module used for direction finding purposes is minimized.

Generally, the unmanned aerial vehicle (UAV), also called drone, is used for direction finding and/or spectrum monitoring purposes, as the unmanned aerial vehicle comprises the at least one antenna module that receives the radio signal. The unmanned aerial vehicle has a specific configuration, as the components used for flying, e.g. the electronic circuit and the at least one motor, are encompassed by the main body of the unmanned aerial vehicle, wherein the main body is located in the middle or rather center of the unmanned aerial vehicle. The respective components of the main body, particularly the electronic components, are shielded with respect to the at least one antenna module by means of the shielding body, thereby ensuring that no interfering signals or rather disturbances of the at least one antenna module occur that is used for direction finding and/or spectrum monitoring.

Accordingly, the shielding body electromagnetically shields the main body, particularly the electronic components encompassed within the main body.

In fact, this is achieved since the at least one antenna module is associated with outwards with regard to the shielding body that shields the antenna module appropriately.

Generally, the electronic circuit is used to control the motor of the unmanned aerial vehicle in order to be operated as a flying unmanned aerial vehicle. In other words, the electronic circuit comprises a control module that is configured to control the motor in order to generate a respective torque, thereby ensuring that the unmanned aerial vehicle can fly.

The at least one antenna module may comprise two antenna elements that each receive a respective radio signal. Alternatively, two antenna modules are provided that each receive a respective radio signal.

In any case, two antenna units, namely the antenna elements of the antenna module or rather the antenna modules, receive the radio signals in a different manner which can be used for direction finding purposes. Particularly, the angle of incidence can be determined due to the fact that two antenna units are provided. In fact, the radio signals received by the at least two antenna units have different radio characteristics that can be evaluated in order to locate the source of a certain radio signal.

In general, direction finding may be based on combining the direction information from two or more suitably spaced antenna units, wherein the source of the radio signal may be located via triangulation techniques. Thus, it is ensured that the antenna units are suitably spaced antenna units with respect to each other.

The unmanned aerial vehicle is generally configured to operate in areas or regions in which a stationary direction finding system cannot operate, for instance mountain side, open sea or rather border regions.

As mentioned above, the at least one antenna module may be associated with the outer housing that surrounds the main body and the shielding body partially. The outer housing further surrounds the rotor partially in order to protect the rotor mechanically. Put differently, the outer housing is externally located with respect to the shielding body that is located at least partially around the main body that is encompasses the at least one electronic circuit and the at least one motor.

An aspect provides that the unmanned aerial vehicle comprises a processing circuit that is configured to process the radio signal received by the at least one antenna module. The processing circuit interacts with the at least one antenna module in order to process the radio signal received. The antenna module may convert the radio signal received into an electrical signal that is forwarded to the processing circuit. The processing circuit analyzes or rather evaluates the radio signal received appropriately.

Generally, the electrical signal is derived from the radio signal received such that the electrical signal forwarded by the antenna module to the processing circuit may also be called radio signal received, as the electrical signal corresponds to the radio signal received.

Particularly, the main body includes the processing circuit that is connected with the at least one antenna module in a signal-transmitting manner. Accordingly, the main body encompasses all electrical components that are located at the center of the unmanned aerial vehicle, wherein these components are further shielded by means of the shielding body appropriately. Hence, it is ensured that no disturbances and/or interferences occur.

Further, the processing circuit may be configured to determine at least one of the spectrum of the radio signal received and an originating direction of the radio signal received. In other words, the spectrum and/or the direction of the radio signal received can be determined by the processing circuit that processes the radio signal received, e.g. the electrical signal forwarded by the at least one antenna module.

Particularly, the processing circuit and the electronic circuit are connected with each other. The processing circuit is configured to control the unmanned aerial vehicle to fly in the originating direction of the radio signal received. As mentioned above, the processing circuit is enabled to determine the spectrum of the radio signal received and/or the originating direction of the radio signal received. Depending on this evaluation, the processing circuit may control the electronic circuit that in turn controls the at least one motor. Thus, the distance to the source of the radio signal of interest can be reduced appropriately when the unmanned aerial vehicle is controlled to fly into the originating direction of the radio signal received.

Another aspect provides that the rotor is larger than the main body. Thus, the dimensions of the rotor are bigger than the ones of the main body.

Generally, the rotor may have at least one blade, particularly several blades. The blades may extend from a coupling point of the rotor radially outwards, wherein the blades have tips or rather free ends. Hence, the rotor, e.g. the blades, extends in a plane that is larger than an area of the main body.

The rotor may have a shaft via which the rotor is connected with the motor located within the main body. The shaft may be coupled to the coupling point of the rotor, which is associated with a center of the rotor. Accordingly, the center of the rotor may coincidence with the motor encompassed by the main body, particularly the center of the main body.

The shielding body located around the main body may at least partially also surround the rotor. Therefore, the at least one antenna module is also shielded from any disturbances that may occur from the rotor, particularly during its operation, namely the rotational movement.

Moreover, an outer housing may surround the rotor partially. The outer housing surrounds the rotor partially in order to protect the rotor mechanically. Put differently, the outer housing is externally located with respect to the shielding body that is located at least partially around the main body that encompasses the at least one electronic circuit and the at least one motor.

Particularly, the outer housing encompasses the rotor, as the outer housing surrounds the rotor, thereby protecting the rotor appropriately.

A further aspect provides, that the at least one antenna module is located on the outer housing and/or at least partially integrated within the outer housing. Therefore, the antenna module may be located on a surface of the outer housing at least partially. Alternatively or additionally, the antenna module is partially integrated within the outer housing, thereby providing a certain protection of the antenna module. For instance, only a receiving portion of the antenna module is located outside of the material defining the outer housing, namely on the surface of the outer housing, whereas internal structures of the antenna module, particularly portions to be protected mechanically, are integrated within the outer housing.

Furthermore, the at least one antenna module may be located completely on the outer housing, namely on a surface of the outer housing.

Alternatively, the at least one antenna module may be integrated completely within the outer housing such that the entire antenna module is mechanically protected.

Another aspect provides that the at least one antenna module has a portion facing away from the rotor that is surrounded by the outer housing partially. The respective portion of the antenna module is facing to the outside, namely the environment, thereby improving the receiving characteristics of the antenna module.

For instance, the at least one antenna module is a compact direction finding antenna. The compact direction finding antenna may relate to a very high frequency/ultra-high frequency (VHF/UHF) direction finding (DF) antenna. Therefore, a small antenna may be used that can be located on the outer housing or rather integrated within the outer housing at least partially, for instance completely.

In addition, the unmanned aerial vehicle may be established by dual propeller circular unmanned aerial vehicle, also called dual propeller circular drone or rather dual propeller ring-shaped drone. Therefore, the unmanned aerial vehicle may comprise at least two rotors acting as propellers for the unmanned aerial vehicle that has a circular shape.

The two rotors acting as the propellers may be stacked on top of each other, wherein the main body is interposed between both rotors. Hence, the rotors are located on opposite sides with respect to the main body.

Alternatively, the two rotors are located on a same side with respect to the main body.

The unmanned aerial vehicle may further have two ring-shaped or rather circular cylindrical members with different diameters, wherein the outer member is associated with the outer housing and the inner member is associated with the shielding body located around the main body (at least partly) and optionally the rotor. In other words, the outer housing and/or the shielding body are/is ring-shaped or rather circular cylindrical, wherein the outer housing is larger than the shielding body, e.g. the outer housing has a larger diameter compared with the shielding body.

In a first operation mode, the unmanned aerial vehicle may be configured to be operated as a flying unmanned aerial vehicle. Thus, the unmanned aerial vehicle can fly. During the first operation mode, it is not necessary that the unmanned aerial vehicle provides direction finding and/or spectrum monitoring functionality. For instance, a camera, a transmitter module for transmitting a radio signal or another module may be provided on the unmanned aerial vehicle that can be used during the first operation mode. In the first operation mode, the antenna module may be deactivated with regard to its receiving characteristics. However, the antenna module may be used for transmitting a radio signal.

In fact, the unmanned aerial vehicle can be used to monitor areas that cannot be accessed by a stationary direction finding system, for instance open sea and/or mountain side. The rotor is operated such that the unmanned aerial vehicle can fly. For flying operation, control signals may be received by the respective antenna module. Thus, the at least one antenna module may be configured to receive control signals used for flying the unmanned aerial vehicle in the first operation mode. The control signals received are forwarded to the electronic circuit appropriately, which in turn controls the motor.

In a second operation mode, the unmanned aerial vehicle may be configured to be operated as a direction finder. In the second operation mode, the at least one antenna module is operated to receive radio signals from the environment, wherein the radio signal received is processed by the processing circuit appropriately in order to determine the direction of the radio signal received and/or perform spectrum monitoring. Therefore, a mobile direction finder is provided.

Accordingly, the at least one antenna module of the unmanned aerial vehicle is used to receive radio signals from the environment in the second operation mode that are forwarded to the processing circuit of the unmanned aerial vehicle for being analyzed accordingly.

The unmanned aerial vehicle may be configured to be operated as a flying direction finder and/or a stationary direction finder. Thus, the unmanned aerial vehicle may be operated in the second operation mode while being operated as flying unmanned aerial vehicle simultaneously. Alternatively, the unmanned aerial vehicle may be mounted on a stand or a vehicle, thereby establishing the stationary direction finder. In both scenarios, the unmanned aerial vehicle is operated in its second operation mode since the antenna module is configured to receive radio signals from the environment.

Thus, the unmanned aerial vehicle has at least a dual functionality, as it can be operated as a mobile direction finder, namely a flying one, and a stationary direction finder that is fixedly coupled to the mast.

In fact, the unmanned aerial vehicle may be configured to be operated as a mobile locator for direction finding. Thus, the unmanned aerial vehicle can also be used to get as close as possible to a certain source of a radio signal detected. This ensures that the location of the source can be identified in an improved manner. In fact, the unmanned aerial vehicle, particularly the processing circuit connected with the at least one antenna module in a signal transmitting manner, may determine the respective coordinates of the source of the radio signal based on the radio signals received by the at least one antenna module.

Accordingly, direction finding can be improved by means of the unmanned aerial vehicle being operated as the flying unmanned aerial vehicle, namely a drone, since a different line of sight can be achieved by means of the unmanned aerial vehicle. In fact, the unmanned aerial vehicle can be flown at different heights, particularly higher heights than the ones that can be achieved by means of a stationary direction finding system. Put differently, the relative orientation can be adapted by means of the unmanned aerial vehicle, as the unmanned aerial vehicle is flown to a height that enables the different line of sight with respect to the source to be identified by means of direction finding techniques.

For instance, the unmanned aerial vehicle comprises a mounting interface configured to establish a releasable mounting connection. The releasable mounting connection can be used to establish a starting position for the unmanned aerial vehicle from which the unmanned aerial vehicle is enabled to start. Alternatively or additionally, the unmanned aerial vehicle can be mounted on a stand or rather a vehicle via the releasable mounting connection while being operated as the stationary direction finder. Particularly, the outer housing may comprise the mounting interface.

In addition, the antenna module may be configured to rotate. In fact, the outer housing may be rotated such that the antenna module associated with the outer housing is rotated. Accordingly, an anti-torque may be created. Generally, Doppler effects can be determined by rotating the at least one antenna module. The rotational speed of the antenna module, e.g. the outer hosing, can be controlled such that it spins quicker or slower. Hence, a regulation can be provided accordingly.

Furthermore, the unmanned aerial vehicle may comprise several antenna modules that are distributed, e.g. over the outer housing. Particularly, the several antenna modules are distributed over the outer housing in a substantially homogeneous manner such that the receiving characteristics of the unmanned aerial vehicle are improved accordingly since the unmanned aerial vehicle can receive the radio signals from all directions.

It is ensured that the rotor and the at least one antenna module are distanced from each other as much as possible, as the rotor is associated with the center of the unmanned aerial vehicle and the outer housing comprises the at least one antenna module. Since several antenna modules may be provided at the outer housing, the antenna modules circumference the rotor associated with the center of the unmanned aerial vehicle.

Generally, the at least one antenna module, particularly the several antenna modules, may be configured to perform the direction finding based on phase information obtained from the radio signal received.

According to an embodiment, the antenna module together with the processing circuit are configured to perform a high-precision correlative interferometer direction finding method for frequencies above about 170 MHz, particularly above 173 MHz, whereas a powerful Watson-Watt direction finding method is used for frequencies below about 170 MHz, particularly below 173 MHz.

In fact, the antenna module may relate to a multi-element direction finding antenna with eight antenna elements, in particular wherein the eight antenna elements are used for the direction finding method for frequencies above about 170 MHz. Alternatively, each of the eight antenna elements may relate to a corresponding antenna module such that the unmanned aerial vehicle may comprise up to eight antenna modules located in an equidistant manner along the outer housing.

In general, it is necessary that the rotor is only partially surrounded by the outer housing and/or the shielding in order to allow the rotor to interact with the environmental air, thereby generating the required lift force.

Generally, the different aspects mentioned can be combined with each other in an arbitrary manner.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

The forgoing aspect and many of the attendant advantages of the claim subject matter will become readily appreciated as the same become better understood by reference to the following detailed description, when taken in conjunction with the accompanying drawings. In the drawings,
- Fig 1 schematically shows a top view on an unmanned aerial vehicle according to a first embodiment of the invention, and
- Fig 2 schematically shows a sectional view of the unmanned aerial vehicle according to a second embodiment of the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

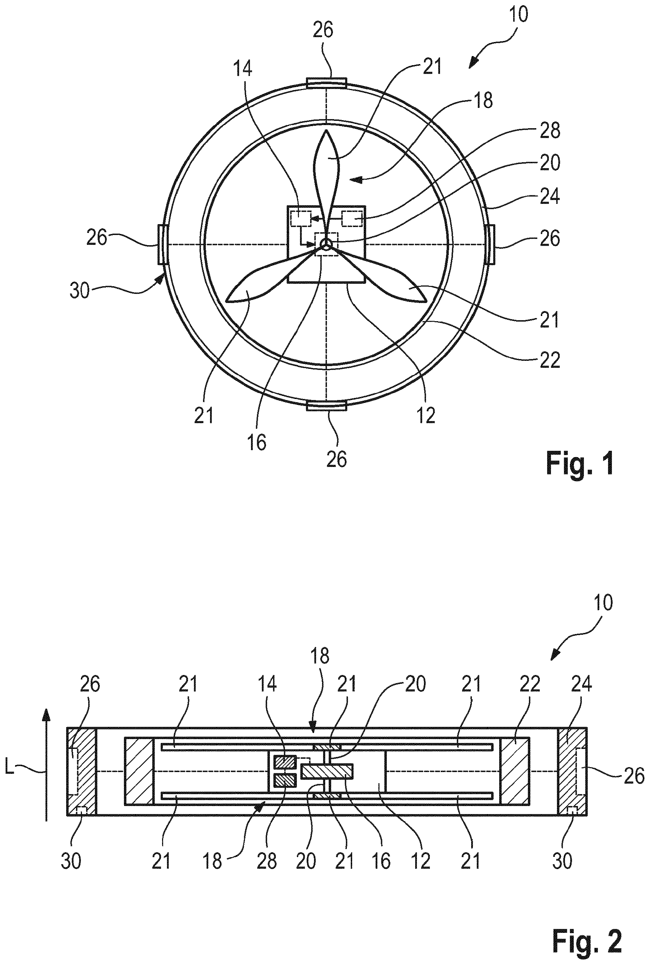

In Fig 1 an unmanned aerial vehicle 10 is shown that is used for direction finding and/or spectrum monitoring.

The unmanned aerial vehicle 10 comprises a main body 12 located at the center of the unmanned aerial vehicle 10.

The main body 12 comprises an electronic circuit 14 that is connected with a motor 16 that is also encompassed by the main body 12. The motor 16 is connected with a rotor 18 via its shaft 20 that is used to forward the torque generated by the motor 16 to the rotor 18. Hence, the rotor 18 is associated with the motor 16 accordingly. In the shown embodiment, the rotor 18 has three blades 21. The blades 21 extend from a coupling point of the rotor 18 with the shaft 20 radially outwards.

In addition, the unmanned aerial vehicle 10 comprises a shielding body 22 that is located around the main body 12 at least partially.

In the shown embodiment, the shielding body 22 surrounds the main body 12 in a circle cylindrical manner. This means that the shielding body 22 has two opposite axial ends that are open, whereas the shielding body 22 has a circle cylindrical shell surface that surrounds the main body 12 completely.

The shielding body 22 also surrounds the rotor 18 partially, namely in the circle cylindrical manner, that is larger than the main body 12 as shown in Figure 1.

Generally, the shielding body 22 provides an electromagnetic protection as electromagnetic disturbances are shielded that may be caused by components associated with the main body 12 as will be described later in more detail.

Further, the unmanned aerial vehicle 10 has an outer housing 24 that surrounds the rotor 18 partially.

In fact, an upper side and a lower side of the outer housing 24 are open, thereby establishing a tube-like housing.

Thus, the outer housing 24 protects the rotor 18 in a mechanical manner, particularly in radial direction.

In addition, the outer housing 24 also surrounds the shielding body 22 partially, as its diameter is larger than the one of the shielding body 22.

Thus, components associated with the outer housing 24 are shielded from the electronics of the main body 12, namely the electronic circuit 14 and the motor 16, e.g. the electronic motor.

Further, the components associated with the outer housing 24 are also shielded from any disturbances originating from the rotor 16, as the shielding body 22 also surrounds the rotor 18 partially.

In addition, the unmanned aerial vehicle 10 also comprises antenna modules 26 that are associated with the outer housing 24. In other words, the outer housing 24 comprises antenna modules 26 that are configured to receive a radio signal that is used for direction finding and/or spectrum monitoring.

The antenna modules 26 are connected with a processing circuit 28 that is assigned to the main body 12. Thus, the processing circuit 28 that is connected with the antenna module 26 in the signal-transmitting manner is also located at the center of the unmanned aerial vehicle 10.

The antenna module 26 converts the radio signal received into an electrical signal that is forwarded to the processing circuit 28 that analyzes or rather evaluates the radio signal received appropriately. Hence, the processing circuit 28 is generally configured to process the radio signal received by the at least one antenna module 26, thereby determining a spectrum of the radio signal received and/or an originating direction of the radio signal received.

The processing circuit 28 and the electronic circuit 14 are connected with each other, thereby establishing a communication connection between the respective circuits 14, 28. Thus, the processing circuit 28 is enabled to control the unmanned aerial vehicle 10 to fly in the originating direction of the radio signal received by controlling the electronic circuit 14 appropriately.

In general, the antenna modules 26 may be located on the outer housing 24 and/or partially integrated within the outer housing 24.

Hence, a portion of the antenna modules 26 may face away from the rotor 18 that is surrounded by the outer housing 24 partially, namely in a radial direction. The respective portion may be used for receiving the radio signals from the environment of the unmanned aerial vehicle 10. However, the antenna modules 26 may also comprise portions that are integrated within the outer housing 24 such that these portions are protected in a mechanical manner.

As shown in Figure 1, the antenna modules 26 may be located at least partly, particularly completely, on outer surfaces of the outer housing 24 that face radially outwards, e.g. facing away from the shielding body 22, the rotor 18 and/or the main body 12, thereby maximizing the electromagnetic shielding effect.

For instance, the antenna modules 26 may be established as compact direction finding antennas, thereby ensuring that the antenna modules 26 can be located on and/or in the outer housing 24. The compact direction finding antenna may relate to a very high frequency/ultra-high frequency (VHF/UHF) direction finding (DF) antenna.

Since the shielding body 22 is located around the main body 12 and the rotor 18, it is ensured that the antenna modules 26 are effectively shielded from any disturbances that may occur from the electronic equipment such as the circuits 14, 28 and from the rotor 18, particularly its rotational movement.

In general, the unmanned aerial vehicle 10 can be operated as a flying unmanned aerial vehicle in a first operation mode, e.g. without any direction finding functionality.

In a second operation mode, the unmanned aerial vehicle 10 is operated as a direction finder. Particularly, the unmanned aerial vehicle 10 is operated as a flying direction finder.

Alternatively, the unmanned aerial vehicle 10 is operated as a stationary direction finder. Thus, the unmanned aerial vehicle 10 can be mounted on a vehicle or a stand.

For this purpose, the unmanned aerial vehicle 10 may comprise a mounting interface 30 that is associated with the outer housing 24. The mounting interface 30 establishes a releasable mounting connection, for instance with a stand or rather a vehicle.

Furthermore, the antenna modules 26 may be configured to rotate, thereby creating an anti-torque. In fact, the outer housing 24 is rotated such that the antenna modules 26 associated with the outer housing 24 are rotated.

Hence, Doppler effects can be determined by rotating the at least one antenna module 26. The rotational speed of the antenna modules 26 can be controlled such that they spin quicker or slower. Hence, a regulation can be provided accordingly.

Moreover, Figure 1 shows that the main body 12 has a center through which a center axis of the unmanned aerial vehicle 10 runs. The center axis coincidences with a rotational axis of the at least one rotor 18. Accordingly, the rotor 18 is located in the center of the unmanned aerial vehicle 10.

Thus, all electronic components as well as the moving parts like the rotor 18 may be centered, whereas the components used for direction finding purposes, namely the antenna modules 26, are located outwards. This ensures that the influence of the respective components on each other are minimized as far as possible.

In Figure 2, it is shown that the unmanned aerial vehicle 10 is established as a dual propeller circular unmanned aerial vehicle, also called dual propeller circular drone or rather dual propeller ring-shaped drone.

In fact, the unmanned aerial vehicle 10 comprises two rotors 18 that are located on opposite sides of the main body 12, particularly the center of the unmanned aerial vehicle 10.

Furthermore, Figure 2 shows that the outer housing 24 as well as the shielding body 22 both are ring-shaped or rather circular cylindrical. Thus, the outer housing 24 as well as the shielding body 22 have open axial ends, but a circular cylindrical or rather ring-shaped shell surface.

Moreover, it is shown that the height, namely the axial length L, of the outer housing 24 is larger than the one of the shielding body 22 which in turn is larger than a core of the unmanned aerial vehicle 10. The core of the unmanned aerial vehicle 10 is established by the main body 12 and the rotor(s) 18 associated therewith.

The outer housing 24 surrounds the shielding body 22 partially, as the outer housing 24 has a larger diameter compared with the shielding body 22 that in turn surrounds the rotor(s) 18 and the main body 12 radially, thereby shielding the antenna modules 26 in an electromagnetic manner from the electronic components, e.g. the circuits 14, 28. Further, any disturbances caused by the rotor 18 are also shielded due to the shielding body 22 effectively.

Certain embodiments disclosed herein, particularly the respective module(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. An unmanned aerial vehicle for at least one of direction finding and spectrum monitoring, the unmanned aerial vehicle comprising:
- a main body (12) including at least one electronic circuit (14) and at least one motor (16),
- at least one rotor (18) associated with the motor (16),
- at least one antenna module (26) configured to receive a radio signal, and
- a shielding body (22) located around the main body (12) at least partly and/or an outer housing (24) surrounding the rotor (18) partially, wherein the outer housing (24) comprises the at least one antenna module (26), and/or wherein the at least one rotor (18) has a rotational axis that coincidences with a center axis of the unmanned aerial vehicle (10), which runs through a center of the main body (12).

2. The unmanned aerial vehicle according to claim 1, wherein the unmanned aerial vehicle (10) comprises a processing circuit (28) that is configured to process the radio signal received by the at least one antenna module (26).

3. The unmanned aerial vehicle according to claim 2, wherein the main body (!2) includes the processing circuit (28) that is connected with the at least one antenna module (26) in a signal-transmitting manner.

4. The unmanned aerial vehicle according to claim 2 or 3, wherein the processing circuit (28) is configured to determine at least one of a spectrum of the radio signal received and an originating direction of the radio signal received, in particular wherein the processing circuit (28) and the electronic circuit (14) are connected with each other, and wherein the processing circuit (28) is configured to control the unmanned aerial vehicle (10) to fly in the originating direction of the radio signal received.

5. The unmanned aerial vehicle according to any of the preceding claims, wherein the rotor (18) is larger than the main body (12).

6. The unmanned aerial vehicle according to any of the preceding claims, wherein the rotor (18) has a shaft (20) via which the rotor (18) is connected with the motor (16) located within the main body (12).

7. The unmanned aerial vehicle according to any of the preceding claims, wherein the shielding body (22) located around the main body (12) at least partly also surrounds the rotor (18).

8. The unmanned aerial vehicle according to any of the preceding claims, wherein the at least one antenna module (26) is located on the outer housing (24) and/or at least partly integrated within the outer housing (24).

9. The unmanned aerial vehicle according to any of the preceding claims, wherein the at least one antenna module (26) has a portion facing away from the rotor (18) that is surrounded by the outer housing (24) partially.

10. The unmanned aerial vehicle according to any of the preceding claims, wherein the at least one antenna module (26) is a compact direction finding antenna.

11. The unmanned aerial vehicle according to any of the preceding claims, wherein the unmanned aerial vehicle (10) is established by a dual propeller circular unmanned aerial vehicle.

12. The unmanned aerial vehicle according to any of the preceding claims, wherein, in a first operation mode, the unmanned aerial vehicle (10) is configured to be operated as a flying unmanned aerial vehicle.

13. The unmanned aerial vehicle according to any of the preceding claims, wherein, in a second operation mode, the unmanned aerial vehicle (10) is configured to be operated as a direction finder, in particular wherein the unmanned aerial vehicle (10) is configured to be operated as at least one of a flying direction finder and a stationary direction finder.

14. The unmanned aerial vehicle according to any of the preceding claims, wherein the unmanned aerial vehicle (10) comprises a mounting interface (30) configured to establish a releasable mounting connection.

15. The unmanned aerial vehicle according to any of the preceding claims, wherein the at least one antenna module (26) is configured to rotate.
